# EUROPÄISCHE PATENTSCHRIFT

(11) **EP 0 705 795 B1**
(45) Veröffentlichungstag und Bekanntmachung des Hinweises auf die Patenterteilung: **05.08.1998**
(21) Anmeldenummer: 95115217.2
(22) Anmeldetag: 27.09.1995
(51) Int. Cl.: C02F 11/12, B09C 1/06, B09C 1/00

(54) **Verfahren zur Aufbereitung von mit organischen und/oder schwermetallhaltigen Verbindungen kontaminierten Schlämmen**
Process for the treatment of sludges containing organic compounds and/or heavy metals
Procédé de traitement des boues contenant des composés organiques et/ou des métaux lourds

(30) Priorität: 04.10.1994 DE 4435379
(43) Veröffentlichungstag der Anmeldung: 10.04.1996
(73) Patentinhaber: Schlobohm, Wilfried, 39175 Gerwisch (DE)
(72) Erfinder: Schlobohm, Wilfried, 39175 Gerwisch (DE)

(56) Entgegenhaltungen:
- WO-A-80/01407
- DE-A- 2 917 123
- GB-A- 1 560 467
- US-A- 4 761 893

## Beschreibung

Die Erfindung betrifft ein Verfahren zur Aufbereitung von organischen und/oder schwermetallhaltigen Verbindungen kontaminierten Schlämmen, beispielsweise Klärschlämmen, bei dem ein inerter wiederverwendungsfähiger Stoff entsteht und kaum Abfallstoffe anfallen. Das Verfahren ist somit insbesondere zur Entsorgung kontaminierter Schlämme einsetzbar.

Es ist bekannt, kontaminierte Stoffe, so auch Schlämme, mittels thermischer Verfahren aufzubereiten bzw. zu entsorgen. Nachteilig für all diese thermischen Verfahren ist ein sehr hoher spezifischer Energiebedarf, verbunden mit allen bekannten Nachteilen des Einsatzes größerer Energiemengen, insbesondere mit hohen Verfahrenskosten.
Ferner ist bekannt, kontaminierte Stoffe durch Zumischung von Erdalkalimetalloxyden und Trocknung aufzubereiten. Dabei führen chemische Änderungen zur Immobilisierung von Schadstoffen, die auf Mineralneubildung (nach dem Muster des als Friedelsches Salz bekannten Speichermineral; Bambauer et al. Fortschr. Mineral., 66, 253 ff, 1988) zurückzuführen sind.
So wird in der DE-OS 29 17 123 ein Verfahren beschrieben, bei dem mit Abfallstoffen beladenes Wasser mit einem Erdalkalimetalloxyd gemischt wird. Das Gemisch wird anschließemd getrocknet und dabei umgerührt. Das Umrühren bewirkt eine höhere Reaktionsausbeute der exothermen Reaktion und verhindert gleichzeitig eine Klumpenbildung. Je nach Art der Abfallstoffe kann es zur vollständigen Aufbereitung des kontaminierten Wassers notwendig sein, in einer weiteren Verfahrensstufe das Gemisch zusätzlich zu erhitzen, etwa auf Temperaturen von 800 °C bis 1450 °C, um so eine Umwandlung der Abfallstoffe in zementartige Substanzen oder Zementzuschläge zu bewirken. Nachteilig bei diesem Verfahren ist sein hoher Energiebedarf.
Es ist weiterhin bekannt, insbesondere kontaminierte Böden durch sogenanntes Landfarming, bei dem schichtweise vorort gebrannter Kalk in den Boden eingearbeitet wird aufzubereiten, d. h. zu dekontaminieren. Die hierbei angewendete Verfahrensweise ist aber bei kontaminiertem Schlamm so nicht anwendbar In der DE-OS 41 19 390 wird ein auf gleichem Wirkmechanismus basierendes Verfahren zum Aufbereiten und auslaugbeständigen Verfestigen von Filterstäuben und Reaktionsprodukten aus der Rauchgasreinigung von Abfall- und Klärschlammverbrennungsanlagen beschrieben, bei dem die aufzubereitenden Stoffe kontinuierlich mit Branntkalk und ggf. Wasser vermischt, anschließend getrocknet und zerkleinert, dann erneut erhitzt und schnell abgekühlt werden. Nachteilig bei diesem Verfahren ist ein hoher Einsatz an zuzumischendem Branntkalk, ein hoher Energiebedarf für die Trocknung und die verfahrensbedingt notwendige Kühlung.

Es ist außerdem bekannt, kontaminierte Stoffe mittels Waschverfahren aufzubereiten bzw. zu entsorgen. Derartige Verfahren sind hinsichtlich ihres Anwendungsbereiches regelmäßig dahingehend eingeschränkt, daß Stoffe mit geringem Partikeldurchmesser nicht aufbereitet bzw. entsorgt werden können. Vielmehr fallen bei diesen Verfahren kontaminierte Schlämme an, die in irgendeiner Weise weiter aufbereitet bzw. entsorgt werden müssen. Dies hat wiederum erhöhte Kosten zur Folge.

Ziel der Erfindung ist es, ein Verfahren zu schaffen, das die genannten Nachteile der bekannten Verfahren zur Aufbereitung von mit organischen und/oder schwermetallhaltigen Verbindungen kontaminierten Schlämmen vermeidet und das insbesondere mit geringeren Kosten verbunden ist. Dazu besteht die Aufgabe, ein Verfahren zu entwickeln, das mit geringem Energieeinsatz verbunden ist und bei dem, wenn überhaupt, nur in sehr geringem Maße Abfallstoffe anfallen, die als Sondermüll entsorgt werden müssen.

Erfindungsgemäß wird diese Aufgabe durch ein Verfahren gemäß dem 1. Patenspruch gelöst.
Es wurde gefunden, daß rieselfähiges Gut, das aus mit organischen und/oder schwermetallhaltigen Verbindungen kontaminiertem Schlamm nach Mischung des Schlammes mit gebranntem Kalk und der sich anschließenden exothermen Reaktion entsteht, überraschender Weise in einer Mikrowirbelmühle derart aufbereitet wird, daß ein wiederverwertbarer Stoff mit vergleichmäßigtem Kornspektrum entsteht, bei dem die schwermetallhaltigen Verbindungen und die organischen Verbindungen teilweise abgetrennt und teilweise inertisiert sind. Das erfindungsgemäße Verfahren zeichnet sich durch einen großen Anwendungsbereich aus. Es ist für alle mit organischen und/oder schwermetallhaltigen Stoffen kontaminierten Schlämme anwendbar. Empfehlenswert ist ein Trockenrückstandsgehalt von ≥ 28 Massenprozent, der gegebenenfalls durch Mischung verschiedener Schlämme erzeugt werden kann. Bei Schlämmen mit erhöhtem Wassergehalt ist es vorteilhaft, wenn der das rieselfähige Gut der Mikrowirbelmühle zuführende Luftstrom vorgewärmt ist. Dadurch wird eine zügigere Trocknung des Gutes erreicht und die Gesamtbearbeitungszeit verkürzt. Eine Vorwärmung kann günstig durch Rückführung erwärmter Abluft in die Mikrowirbelmühle erreicht werden. Vorteilhaft kann es auch sein, wenn die Abluft organische Bestandteile enthält, diese in einem Verbrennungsprozeß zur Vorwärmung des Luftstromes einzusetzen.
Hinsichtlich des Kornspektrums der festen Bestandteile des aufzuarbeitenden kontaminierten Schlammes erlaubt das erfindungsgemäße Verfahren einen sehr breiten Spielraum. Neben Partikelgrößen im Schluffbereich, aus denen Schlämme häufig überwiegend bestehen, ist es unschädlich,wenn auch Partikelgrößen bis ca. 10 mm auftreten. Diese können problemlos der Mikrowirbelmühle mit aufgegeben werden. Empfehlenswert ist es aber, größere Fremdkörper aus dem Schlamm zu entfernen, um eine Zerstörung der Apparatetechnik zu vermeiden.
Eine besondere Wirkung des erfindungsgemäßen Verfahrens wird darin gesehen, daß die innerhalb der Mikrowirbelmühle ablaufenden Prozesse, bei denen das im Luftstrom geführte rieselfähige Gut in sehr große Turbulenzen versetzt wird, die eine Vielzahl von Partikelzusammenstößen bewirken, nicht nur zu einer Inertisierung von an den Partikeln anhaftenden schwermetallhaltigen und/oder organischen Verbindungen, sondern auch in beträchtlichem Maße eine Abtrennung, insbesondere organischer Verbindungen, vom Gut bewirken. Die abgetrennten Verbindungen gehen in die Gasphase über und werden Bestandteil der Abluft oder lagern sich an Kalkpartikel an. Das erfindungsgemäße Verfahren bewirkt damit nicht nur eine Inertisierung des kontaminierten Gutes, sondern teilweise auch eine echte Abtrennung insbesondere organischer Verbindungen. Je nach Vorhandensein kann auch eine Abrennung einzelner schwermetallhaltiger Verbindungen vom Gut erfolgen. Das betrifft insbesondere niedrigsiedende Schwermetalle, wie Quecksilber und Cadmium, die dann ebenfalls entweder Bestandteil der Abluft werden oder sich an Kalkpartikel anlagern. Dabei ist die aufgewandte Energiemenge vergleichsweise gering und gestattet eine sehr kostengünstige Verfahrensdurchführung.
In Abhängigkeit von den im Ausgangsschlamm enthaltenen organischen und/oder schwermetallhaltigen Verbindungen werden in der Abluft auch organische und/oder schwermetallhaltige Verbindungen enthalten sein, die gegebenenfalls eine Reinigung der Abluft erforderlich machen.

Das erfindungsgemäße Verfahren soll nachfolgend anhand eines Ausführungsbeispieles näher erläutert werden. Die zugehörige Zeichnung zeigt ein Verfahrensschema.
Mit organischen und schwermetallhaltigen Verbindungen belasteter Schlamm mit einem Trockensubstanzgehalt von 28 Massenprozent aus einem Schlammabscheider einer Autowaschanlage wird in einen Behälter 1 gegeben und dort durch Zugabe von gebranntem Kalk in einer Menge von 8 Massenprozent bezogen auf den zugeführten Schlamm vorkonditioniert. Der mit gebranntem Kalk versetzte Schlamm verbleibt bis zum weitgehenden Abschluß der einsetzenden exothermen Reaktion im Behälter 1. Infolge der exothermen Reaktion steigt der Trockensustanzgehalt auf ca. 35 Massenprozent an. Es entsteht ein rieselfähiges Gut, das mittels eines Baggers in einen Vorlagebehälter 2 überführt wird. Der Vorlagebehälter 2 weist Rührwerke 3 auf die das rieselfähige Gut gleichmäßig einem Schneckenförderer 4 zuführen. Dieser fördert je Sekunde ca. 0,5 kg rieselfähiges Gut in einen Einfülltrichter 5 einer Mikrowirbelmühle 6. Der Einfülltrichter 5 weist eine Zuführschnecke 7 auf, die kontinuierlich rieselfähiges Gut der Einfüllöffnung der Mikrowirbelmühle 6 zuführt, das hier von einem in einem Heißlufterzeuger 8 vorgewärmten Luftstrom von 1,25 m³/s erfaßt und in den Mahlraum der Mikrowirbelmühle 6 gefördertwird. Luftsrom und rieselfähiges Gut sind so dosiert, daß das rieselfähige Gut ständig in der Luftschwebe gehalten wird.
Im Mahlraum der Mikrowirbelmühle 6 prallen die Partikel des rieselfähigen Gutes infolge sehr starker Turbulenzen heftig gegeneinander bzw. gegen die Wandungen der Mikrowirbelmühle 6. Hierbei erfolgt eine Zerkleinerung der Partikel, wobei gleichzeitig an den Partikeln anhaftende organische Verbindungen von diesen abgetrennt werden. Parallel dazu erfolgt eine Einkapselung der schwermetallhaltigen Verbindungen, teilweise auch der organischen Verbindungen durch den in der Vorkonditionierung beigemischten gebrannten Kalk. Nach einer Verweilzeit von ca. 0,16 Sekunden sind ca. 99 Massenprozent des rieselfähigen Gutes aufeinen Partikeldurchmesser kleiner 0,09 mm zerkleinert und werden im Abluftstrom aus der Mikrowirbelmühle 6 ausgetragen.
Von einem Hochleistungsventilator 9 wird die beladene Abluft durch einen Zyklonvorabscheider 10 gesaugt. Der im Zyklonvorabscheider 10 abgetrennte Feststoff gelangt über eine Zellenradschleuse 11 zu einer Sammelschnecke 12. Ein weiterer Ventilator 13 führt die noch mit Feinstpartikeln beladene Abluft einem Ovalschlauchfilter 14 zu. Die im Ovalschlauchfilter 14 abgeschiedenen Partikel gelangen über eine Zellenradschleuse 15 ebenfalls zur Sammelschnecke 12 und weiter in einen Sammelcontainer 16.
Die Abluft wird abschließend durch einen Waschturm und einen Bio-Filter 17 geleitet und dann über einen Kamin 18 in die Atmosphäre entlassen. Der Bio-Filter 17 wird über eine Dosierstation mit Nährlösung versorgt. Der im Bio-Filter 17 anfallende Schlamm wird nach Behandlung in einer chemisch-physikalischen Behandlungsanlage zur Aufbereitung dem Behälter 1 zugeführt.
Der Verfahrensablauf wird prozeßgrößenabhängig geführt. Der im Sammelcontainer 16 gesammelte mit dem erfindungsgemäßen Verfahren behandelte Schlamm wird als Zuschlagstoff in der Stein-Erden-Industrie verwendet.
In gleicher Weise und mit gleicher apparativer Technik wurde Hafenschlick ebenfalls mit einem Trockensubstanzgehalt von 28 Massenprozent erfolgreich aufbereitet.

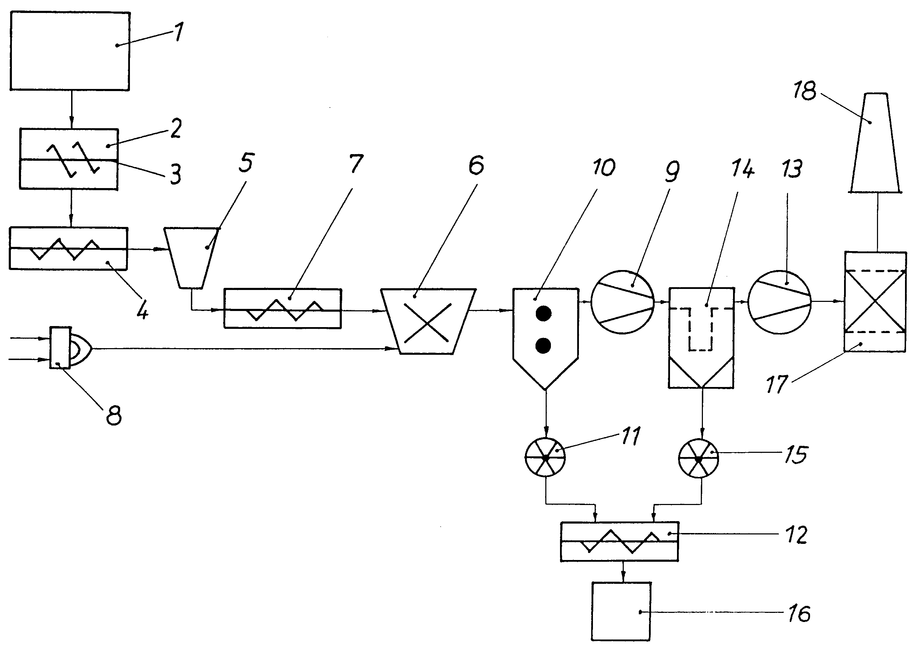

## Patentansprüche

1. Verfahren zur Aufbereitung von mit organischen und/oder schwermetallhaltigen Verbindungen kontaminierten Schlämmen unter Zugabe von gebranntem Kalk,
dadurch gekennzeichnet,
daß zunächst eine Mischung von kontaminiertem Schlamm und gebranntem Kalk in einem solchen Verhältnis erfolgt, daß nach der sich anschließenden exothermen Reaktion ein rieselfähiges Gut entsteht, daß das rieselfähige Gut in einem nachfolgenden Verfahrensschritt im Luftstrom einer Mikrowirbelmühle (6) aufgegeben und innerhalb der Mikrowirbelmühle (6) in der Luftschwebe gehalten wird, daß nach erfolgter Zerkleinerung von ca. 99 Massenprozent des aufgegebenen rieselfähigen Gutes auf einen Partikeldurchmesser kleiner 0,15 mm das Gut im Abluftstrom aus der Mikrowirbelmühle (6) ausgetragen wird und danach eine Trennung von Feststoff und Abluft erfolgt.

2. Verfahren nach Anspruch 1,
dadurch gekennzeichnet,
daß der das rieselfähige Gut der Mikrowirbelmühle (6) zuführende Luftstrom vorgewärmt wird.

3. Verfahren nach Anspruch 1 oder 2,
dadurch gekennzeichnet,
daß die Abluft nach der Abtrennung des Feststoffes einer Abgasreinigung unterzogen wird.

4. Verfahren nach Anspruch 1 bis 3,
dadurch gekennzeichnet,
daß die vom Feststoff getrennte Abluft der Mikrowirbelmühle (6) teilweise oder vollständig der Mikrowirbelmühle (6) wieder zugeführt wird.

5. Verfahren nach Anspruch 2 bis 4,
dadurch gekennzeichnet,
daß die vom Feststoff getrennte Abluft der Mikrowirbelmühle (6) teilweise oder vollständig zur Vorwärmung des das rieselfähige Gut der Mikrowirbelmühle (6) zuführenden Luftstromes verwendet wird, indem sie als Verbrennungsluft dient.

## Claims

1. Procedure for preparation of contaminated sludges containing organic compounds and/or heavy-metals by adding burnt lime,
being characterized by the fact
that initially a mixture of contaminated sludge and burnt lime is formed in such a ratio that in the following exothermic reaction a flowable substance is formed that is in the following stage charged as the air flow entering a micro turbulence mill (6) and kept inside the micro turbulence mill (6) in air suspension such that, after comminution of some 99 percent by weight of the charged flowable substance to a particle size smaller than 0,15 mm, the substance contained in the waste-air stream is discharged from the micro turbulence mill (6) in a form permitting subsequent separation of solid matter from the waste air.

2. Procedure according to claim 1,
being characterized by the fact
that the air flow feeding the micro turbulence mill (6) with flowable substance is preheated.

3. Procedure according to claim 1 or 2,
being characterized by the fact
that the waste air is subjected to gas cleaning treatment after separation of solid matter.

4. Procedure according to claim 1 through 3,
being characterized by the fact
that the waste air of micro turbulence mill (6) isolated from solid matter is partially or completely fed into the micro turbulence mill (6) again.

5. Procedure according to claim 2 through 4,
being characterized by the fact
that the waste air of micro turbulence mill (6) isolated from solid matter is partially or completely used for preheating the air flow containing the flowable substance and used to feed the micro turbulence mill (6), i.e. by use of said waste air as combustion air.

## Revendications

1. Procédure à traiter des boues, contaminées par de combinaisons organiques et/ou par de combinaisons contenant de métaux lourds, en additionnant de la chaux cuite,
caractérisée de manière,
que, en premier lieu, il se fait un mélange de boue contaminée et de chaux cuite dans un tel rapport, que, après la réaction exothermique suivante, se forme un produit granulé, et ce produit granulé sera, dans la suite, introduit dans le courant d'air d'un micro-moulin à couche fluidisée (6), et à l'intérieur du micro-moulin (6) le produit se tient en suspension dans l'air, et après la fragmentation de 99 % de la masse du produit granulé introduit pour atteindre un diamètre des particules de moins de 0,15 mm le produit sera évacué dans le courant d'air de décharge du micro-moulin à couche fluidisée (6), et ensuite se fera la séparation de la matière solide et de l'air d'évacuation.

2. Procédure selon la revendication 1,
caractérisée de manière,
que le courant d'air introduisant le produit granulé dans le micro-moulin à couche fluidisée (6), sera préchauffé.

3. Procédure selon les revendications 1 ou 2,
caractérisée de manière,
que l'air d'évacuation sera soumis, après la séparation de la matière solide, à une équration de gaz d'échappement.

4. Procédure selon les revendications 1 à 3,
caractérisée de manière,
que l'air d'évacuation sortant du micro-moulin à couche fluidisée (6), séparé de la matière solide, sera de nouveau partiellement ou totalement introduit dans le micro-moulin (6).

5. Procédure selon les revendications 2 à 4,
caractérisée de manière,
que l'air d'évacuation du micro-moulin à couche fluidisée (6), séparé de la matière solide, sera utilisé partiellement ou totalement pour préchauffer le courant d'air introduisant le produit granulé dans le micro-moulin à couche fluidisée, de façon qu'il sert d'air de combustion.
